# FASCICULE DE BREVET EUROPEEN

(11) **EP 3 762 295 B1**
(45) Date de publication et mention de la délivrance du brevet: **23.03.2022**
(21) Numéro de dépôt: 19707820.7
(22) Date de dépôt: 05.03.2019
(51) Int. Cl.: B64F 1/28

(54) **DISPOSITIF D'AVITAILLEMENT D'UN AÉRONEF, MÉTHODE DE MISE EN SERVICE ET PROCÉDÉ D'AVITAILLEMENT AU MOYEN D'UN TEL DISPOSITIF**
BETANKUNGSVORRICHTUNG FÜR FLUGZEUGE, KOMMISSIONIERVERFAHREN UND BETANKUNGSVERFAHREN MIT EINER SOLCHEN VORRICHTUNG
AIRCRAFT REFUELLING DEVICE, COMMISSIONING METHOD, AND REFUELLING METHOD USING SUCH A DEVICE

(30) Priorité: 06.03.2018 FR 1851925
(43) Date de publication de la demande: 13.01.2021
(73) Titulaire: DESAUTEL, 69003 Lyon (FR)
(72) Inventeur: BECK, Claude, 33200 Bordeaux (FR)
(74) Mandataire: Lavoix
(86) Numéro de dépôt international: PCT/EP2019/055403
(87) Numéro de publication internationale: WO 2019/170647

(56) Documents cités:
- WO-A2-2010/128246
- CN-A- 106 927 061
- DE-C1- 19 835 621
- JP-A- 2003 154 886
- US-B1- 6 234 224

## Description

La présente invention a trait à un dispositif d'avitaillement d'un aéronef, ainsi qu'à une méthode de mise en service d'un tel dispositif et à un procédé d'avitaillement d'un aéronef, au moyen d'un tel dispositif.

Sur les aéroports et aérodromes civils et militaires, il est connu d'utiliser des engins d'avitaillement que l'on déplace à proximité des aéronefs pour procéder au remplissage en carburant de leurs réservoirs.

Ainsi, WO-A-2010/128246 divulgue un engin d'avitaillement dont l'accrocheur d'aile est équipé d'un capteur permettant de déterminer la valeur de la pression d'un écoulement de carburant traversant cet accrocheur d'aile. Ce dispositif donne satisfaction.

Un tel engin d'avitaillement, de type oléoserveur, comporte des portions de tuyauterie rigides et fixes par rapport à son châssis roulant, ainsi qu'un conduit déformable, qui permet d'ajuster la position de l'accrocheur d'aile en fonction de la position d'un orifice d'entrée d'un réservoir de l'aéronef. Un tel conduit déformable peut être réalisé par un tuyau flexible, notamment en élastomère, ou par une série de portions de tuyaux rigides réunies entre elles par des joints tournants.

La situation est comparable pour un avitailleur qui, à la différence d'un oléoserveur, porte sur son châssis un réservoir de carburant.

Dans ces matériels connus, un régulateur de pression mécanique est disposé en aval du conduit déformable, de façon à limiter la pression de l'écoulement de carburant qui transite par l'accrocheur d'aile et qui est déversé dans le réservoir de l'aéronef. Un tel régulateur de pression mécanique qui est généralement attaché à l'accrocheur d'aile est un matériel relativement lourd et complexe, qui requiert des opérations de maintenance élaborées. En outre, le régulateur de pression mécanique est, en pratique, réglé pour limiter la pression de l'écoulement pénétrant dans le réservoir de l'aéronef a une valeur voisine de 3,5 bars. Si la pression de l'écoulement est comprise entre 3 et 3,5 bars, le régulateur mécanique est actif et génère une perte de charge variable, qui limite cette pression. Si la pression de cet écoulement est inférieure à 3 bars, le régulateur mécanique est totalement ouvert.

C'est à ces inconvénients qu'entend plus particulièrement remédier l'invention en proposant un nouveau dispositif d'avitaillement d'un aéronef qui est plus léger, plus simple, plus fiable et plus économique à mettre en œuvre que ceux de l'état de la technique.

A cet effet, l'invention concerne un dispositif d'avitaillement d'un aéronef, ce dispositif comprenant un conduit déformable de circulation de carburant dont l'extrémité aval est équipée d'un accrocheur d'aile pour son raccordement sur un orifice d'entrée d'un réservoir de carburant de l'aéronef. Ce dispositif d'avitaillement comprend un premier capteur de mesure de valeurs de la pression, au voisinage de l'accrocheur d'aile, d'un écoulement de carburant dans le conduit déformable, ainsi qu'un organe de détermination du débit de l'écoulement dans le conduit déformable. Conformément à l'invention, le dispositif d'avitaillement comprend, en outre, un deuxième capteur de mesure de valeurs de la pression de l'écoulement en amont du conduit déformable,. De plus, il est prévu au moins une unité de calcul de la valeur de la perte de charge de l'écoulement dans le conduit déformable, sur la base des valeurs de pression mesurées par les premier et deuxième capteurs, ainsi qu'une unité de comparaison de cette valeur de perte de charge calculée avec une valeur de référence établie pour le même débit de l'écoulement.

Grâce à l'invention, les premier et deuxième capteurs permettent de contrôler, en permanence, la perte de charge qui a effectivement lieu dans le conduit déformable et, en la comparant à la valeur de référence, de réagir en cas de dérive de la perte de charge calculée. En effet, il est possible de considérer que, en fonctionnement normal du dispositif d'avitaillement, cette perte de charge varie peu en l'absence d'anomalies ou de modifications du circuit d'écoulement du carburant dans le dispositif d'avitaillement. Ainsi, une dérive de la valeur de la perte de charge calculée, c'est-à-dire une variation importante par rapport de cette valeur à la valeur de référence, peut être considérée comme correspondant à une situation anormale, telle que le colmatage du tamis d'une crépine d'entrée de l'accrocheur d'aile ou une conformation du conduit déformable résultant dans une restriction localisée de sa section. Le contrôle en continu de la perte de charge permet donc de réagir à une situation anormale, y compris en dehors de la plage de fonctionnement actif d'un régulateur de pression mécanique.

Selon des aspects avantageux mais non obligatoires de l'invention, un tel dispositif peut incorporer une ou plusieurs des caractéristiques suivantes, prises selon toute combinaison techniquement admissible :
- Le dispositif d'avitaillement comprend un régulateur de pression installé sur le trajet de l'écoulement, en amont du conduit déformable et une boucle de pilotage de ce régulateur de pression comprenant le premier capteur de mesure des valeurs de la pression de l'écoulement et la ou les unités de calcul et de comparaison.
- Le dispositif d'avitaillement est dépourvu de régulateur de pression mécanique disposé, sur le trajet de l'écoulement, en sortie ou en aval du conduit déformable.
- Le dispositif d'avitaillement comprend également des moyens de calcul d'une valeur de la pression, au voisinage de l'accrocheur d'aile, de l'écoulement de carburant dans le conduit déformable, sur la base de la pression de l'écoulement en amont du conduit déformable et de la valeur de référence établie pour le même débit de l'écoulement.

Selon un autre aspect, l'invention concerne une méthode de mise en service d'un dispositif d'avitaillement tel que mentionné ci-dessus, cette méthode comprenant au moins des étapes consistant à :
a) établir une relation entre le débit de l'écoulement de carburant dans le conduit déformable et la perte de charge dans le conduit déformable, en configuration normale de fonctionnement du dispositif d'avitaillement ;
b) mémoriser, pour différents débits de l'écoulement, une valeur de référence de la perte de charge dans le conduit déformable.

Grâce à la méthode de l'invention, il est possible, à la mise en service du dispositif d'avitaillement, de connaître la perte de charge normale ou admissible dans le conduit déformable, ce qui permet de considérer cette perte de charge comme une valeur de référence et de réagir de façon appropriée lorsque la perte de charge réellement mesurée lors de l'utilisation ultérieure du dispositif d'avitaillement s'écarte sensiblement de la valeur de référence. Au sens de la présente invention, une mise en service d'un dispositif d'avitaillement peut être effectuée avant la première utilisation du dispositif, lorsque celui-ci est neuf, ou après une opération de maintenance impactant le conduit déformable ou les moyens de mesure associés.

Selon encore un autre aspect, l'invention concerne un procédé d'avitaillement d'un aéronef au moyen d'un dispositif d'avitaillement tel que mentionné ci-dessus, mis en service par la méthode précitée. Ce procédé comprend au moins des étapes consistant à :
c) mesurer une première valeur de la pression de l'écoulement de carburant dans le conduit déformable au voisinage de l'accrocheur d'aile, au moyen du premier capteur ;
d) déterminer le débit de l'écoulement dans le conduit déformable ;
e) mesurer une deuxième valeur de la pression en amont du conduit déformable, au moyen du deuxième capteur ;
f) calculer la valeur de la perte de charge dans le conduit déformable, par soustraction de la valeur mesurée à l'étape c) de la valeur mesurée à l'étape e) ; et
g) comparer la valeur calculée à l'étape f) à la valeur de référence mémorisée à l'étape b) pour le même débit que celui déterminé à l'étape d).

Ce procédé de l'invention tire parti du fait que les deux capteurs permettent de mesurer des valeurs de pression exploitables pour calculer la perte de charge réelle dans le conduit déformable. La comparaison de cette valeur de perte de charge calculée à la valeur de référence, qui correspond à un fonctionnement normal du dispositif d'avitaillement, permet de s'assurer que le dispositif d'avitaillement est utilisé dans une configuration proche de sa configuration normale de fonctionnement et de détecter lorsque tel n'est pas le cas.

De façon avantageuse, le procédé précité comprend au moins une étape supplémentaire consistant, en fonction du résultat de l'étape de comparaison g) et d'une marge de tolérance préétablie, à signaler que l'avitaillement a lieu de façon normale ou anormale.

Dans le cas où les valeurs de pression mesurées par le premier capteur sont transmises à une unité de pilotage du dispositif d'avitaillement, on peut prévoir que, en cas d'interruption temporaire de la transmission des valeurs mesurées par le premier capteur de pression, ce procédé comprend au moins des étapes consistant à :
i) accéder la valeur de référence de la perte de charge mémorisée à l'étape b) pour le même débit que celui déterminé à l'étape d) ;
j) calculer une valeur de substitution de la valeur mesurée par le premier capteur de pression en soustrayant la valeur de référence accédée à l'étape i) de la deuxième valeur mesurée à l'étape e) ; et
k) utiliser la valeur de substitution calculée à l'étape j), à la place de la valeur mesurée par le premier capteur, pour le contrôle de l'avitaillement en cours, sans interrompre l'avitaillement.

Ce procédé permet de résoudre un problème particulier lié à la latence de la transmission d'un signal représentatif de la valeur mesurée par le premier capteur, en particulier lorsque cette transmission a lieu de façon non filaire. En effet, une telle transmission non filaire est souvent préférable dans ce cas, à cause du caractère déformable du conduit. Une telle transmission non filaire peut être perturbée ou retardée par des causes externes. En faisant l'hypothèse que la perte de charge est stable, c'est-à-dire à peu près constante, au cours d'une période d'utilisation du dispositif d'avitaillement, ce procédé de l'invention permet de compenser temporairement un défaut de transmission du signal représentatif de la valeur mesurée par le premier capteur en reconstituant la valeur de substitution, ce qui évite d'interrompre l'avitaillement en cours.

De façon avantageuse, ce procédé comprend une étape supplémentaire consistant, en cas de mise en œuvre des étapes j) et k), à signaler que l'avitaillement a lieu en mode temporairement dégradé.

On peut, en outre, prévoir que les étapes d), e), i), j) et k) sont mises en œuvre par itération dans un intervalle de temps de durée maximale prédéterminée et, que, en cas de persistance de l'interruption temporaire de la transmission de valeur mesurée par le premier capteur au-delà de cette durée maximale prédéterminée, un signal d'alarme est émis.

L'invention sera mieux comprise et d'autres avantages de celle-ci apparaîtront plus clairement à la lumière de la description qui va suivre d'un mode de réalisation d'un dispositif d'avitaillement conforme à l'invention, de sa méthode de mise en service et d'un procédé d'avitaillement associé, donnée uniquement à titre d'exemple et faite en référence aux dessins annexés, dans lesquels :
- la figure 1 est une représentation schématique de principe d'un engin d'avitaillement incluant un dispositif d'avitaillement conforme à l'invention, en cours d'utilisation pour remplir le réservoir d'un aéronef en carburant ;
- la figure 2 est une vue en élévation d'un accrocheur d'aile et d'une partie d'un conduit de circulation de carburant appartenant au dispositif d'avitaillement représenté à la figure 1 ;
- la figure 3 est une représentation schématique d'une courbe de valeurs de référence de perte de charge utilisée dans le procédé d'avitaillement de l'invention ;
- la figure 4 est un schéma bloc d'une méthode de mise en service conforme à l'invention et
- la figure 5 est un schéma bloc d'un procédé d'avitaillement conforme à l'invention.

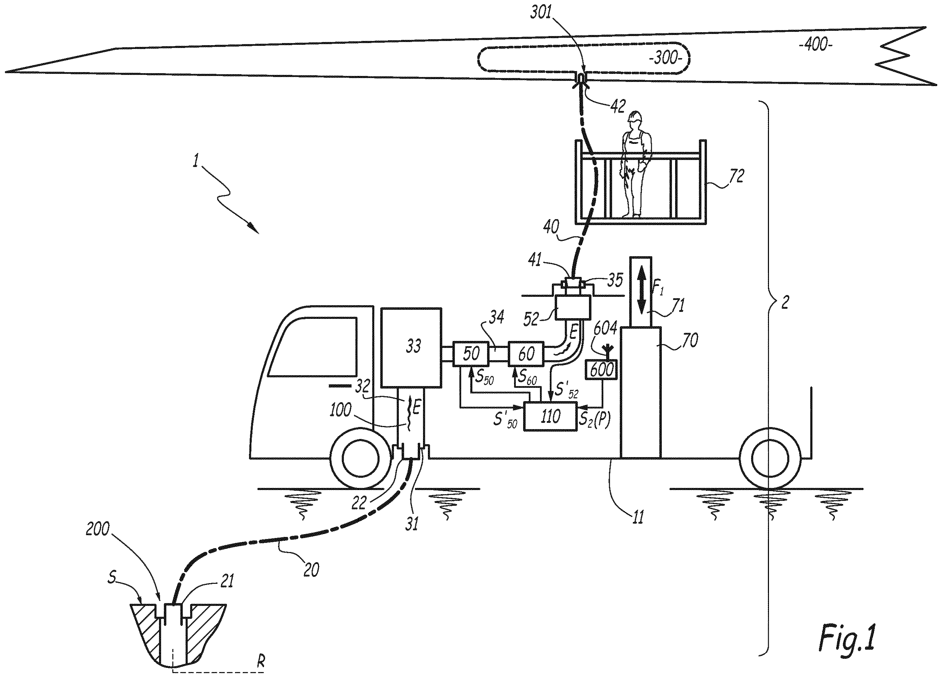

L'engin d'avitaillement ou oléoserveur 1 représenté à la figure 1 se présente globalement sous la forme d'un véhicule industriel équipé d'un tuyau déformable 20, en l'espèce un tuyau flexible, permettant de le raccorder sur une bouche de sortie 200 appartenant à un réseau fixe R de distribution de carburant dans un aéroport. La bouche 200 est disposée sous la surface S du sol, au voisinage d'un emplacement de stationnement d'un aéronef 400. Le tuyau 20 est équipé d'un connecteur 21 de raccordement sur la bouche 200. A son extrémité opposée au connecteur 21, le tuyau 20 est équipé d'un autre connecteur 22 de raccordement sur un connecteur 31 constituant l'embouchure d'un conduit 32 fixe de l'engin 1. En d'autres termes, le tuyau 20 permet de raccorder la bouche de sortie 200 qui appartient au réseau fixe R, au conduit 32, qui appartient à l'engin 1.

Le conduit 32 débouche dans un filtre 33 prévu pour débarrasser le carburant des résidus, notamment aqueux, qu'il peut contenir.

En aval du filtre 33, un conduit 34 s'étend jusqu'à un connecteur 35 sur lequel est raccordé un connecteur amont 41 d'un second tuyau déformable 40, en l'espèce un tuyau flexible. Un accrocheur d'aile 42 est raccordé sur l'extrémité aval 43 du second tuyau déformable 40 et constitue un moyen de branchement du tuyau 40 sur un orifice d'entrée 301 d'un réservoir 300 intégré à l'aile 400 d'un avion.

Selon un aspect optionnel de l'invention qui n'est pas représenté pour la clarté du dessin, mais qui est habituel en pratique, un doublement du second tuyau flexible 40 et de l'accrocheur d'aile 42 est envisageable.

Pour la clarté des dessins, les tuyaux flexibles 20 et 40 sont représentés, à la figure 1, par des traits d'axes correspondant à leurs axes longitudinaux respectifs.

Les pièces 20 à 42 appartiennent à un dispositif d'avitaillement 2 qui fait partie de l'engin 1.

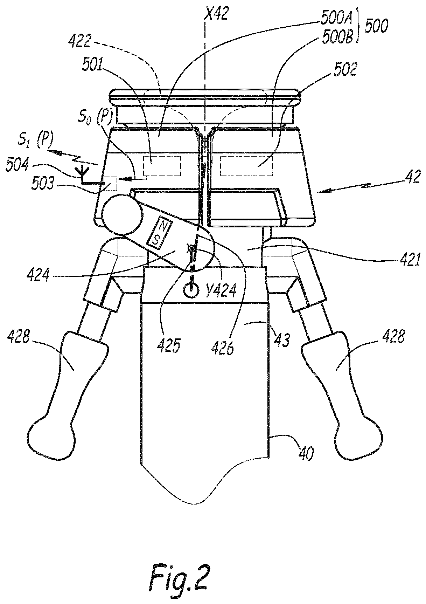

L'accrocheur d'aile 42 comprend un corps cylindrique 421 équipé d'une bague, non représentée et connue en soi, de préférence au profil international ISO45, permettant son verrouillage par coopération de formes sur un connecteur correspondant, également non représenté et connu en soi, délimitant l'orifice 301. L'accrocheur d'aile 42 est également pourvu d'une soupape 422, dite frontale, qui est mobile en translation selon un axe longitudinal X42 de l'accrocheur d'aile 42, entre une première position fermée représentée à la figure 2, où cette soupape frontale 422 est en appui contre un siège non représenté formé par le corps 421, et une deuxième position ouverte non représentée, où la soupape frontale 422 est écartée du siège.

Dans sa première position fermée, la soupape frontale 422 empêche l'écoulement de carburant du tuyau flexible 40 vers le réservoir 300. Dans sa deuxième position ouverte, la soupape frontale 422 autorise un tel écoulement.

La manœuvre de la soupape frontale 422 entre ses première et deuxième positions est effectuée à l'aide d'un levier 424 qui est monté pivotant sur le corps 421 autour d'un axe Y424 perpendiculaire à l'axe longitudinal X42. Le levier 424 est mobile autour de l'axe Y424 entre les deux positions extrêmes. Un ensemble de bielles 425 et 426 articulées, représentées de façon très schématique, par transparence, à la figure 2, relie le levier 424 à la soupape 422 et transforme le mouvement de rotation du levier 424, autour de l'axe Y424, en un mouvement de translation de la soupape frontale, le long de l'axe X42.

Il peut ici être fait usage de l'enseignement technique de US-A-4 567 924 qui est incorporé dans la présente description par référence. D'autres systèmes de transmission de mouvement entre le levier 424 et la soupape frontale 422 sont également envisageables.

Le corps 421 est, quant à lui, équipé de deux poignées 428 de manipulation, qui permettent à un opérateur de l'approcher de l'orifice 301 ou de l'éloigner de celui-ci, respectivement en début et en fin d'avitaillement. L'accrocheur d'aile 42 est verrouillé sur l'orifice 301 et déverrouillé par rapport à celui-ci par rotation autour de l'axe X42, respectivement en début et en fin d'avitaillement.

En variante, les deux poignées 428 sont remplacées par un volant.

Les éléments 32 à 34 définissent ensemble un trajet fixe d'écoulement du carburant, entre deux lignes déformables, en l'espèce flexibles, constituées respectivement par les tuyaux 20 et 40. Ce trajet d'écoulement fixe et ces lignes déformables s'étendent entre le connecteur 21 de branchement sur le réseau R et l'accrocheur d'aile 42 de branchement sur l'orifice 301, au sein du dispositif d'avitaillement 2.

On note E l'écoulement de carburant entre la bouche 200 et le réservoir 300.

Le dispositif d'avitaillement 2 est équipé d'un compteur 50 qui permet de mesurer la quantité de carburant transitant par le conduit 34 du fait de l'écoulement E, c'est-à-dire la quantité de carburant délivrée au réservoir 300 pendant une période de fonctionnement du dispositif 2.

Le dispositif d'avitaillement 2 comprend également un capteur de pression 52 qui permet de mesurer la pression de l'écoulement E immédiatement en amont du connecteur 35, par exemple dans les 10 cm avant ce connecteur dans le sens de l'écoulement E, donc en particulier dans le tuyau flexible 40.

En variante, le capteur 52 permet de mesurer également le débit de l'écoulement E dans le tuyau flexible 40.

Le dispositif d'avitaillement 2 comporte également un régulateur de pression 60, qui permet de contrôler la pression de l'écoulement E dans la portion aval du conduit 34, donc dans le tuyau flexible.

Les organes 50, 52 et 60 appartiennent également au dispositif d'avitaillement 2.

Une unité électronique 110 appartenant également au dispositif d'avitaillement 2 est montée sur le châssis de l'engin 1 et contrôle, par des signaux électroniques adaptés S₅₀ et S₆₀ respectivement le compteur 50 et le régulateur de pression 60. Le compteur 50 fournit à l'unité 110, un signal S'₅₀ représentatif du comptage qu'il effectue. Le capteur de pression 52 fournit, quant à lui, à l'unité 110, un signal S'₅₂ représentatif des valeurs de pression P2 qu'il mesure.

L'engin 1 porte un vérin hydraulique 70 dont la tige 71 est équipée d'une plateforme 72 sur laquelle se tient un opérateur qui peut manipuler la partie aval du tuyau 40, notamment l'accrocheur d'aile 42. La tige 71 permet à l'opérateur, par son mouvement vertical ascendant ou descendant représenté par la double flèche F₁, d'accéder à l'orifice d'entrée 301.

Un module 500, qui appartient également au dispositif d'avitaillement 2, est disposé autour du corps 421 de l'accrocheur d'aile 42. Ce module 500 se présente sous la forme de deux demi-coquilles 500A et 500B qui enserrent le corps 421. Le module 500 comprend une cellule 501 de mesure de la pression de l'écoulement E pénétrant dans l'accrocheur d'aile 42. La cellule 501 est logée dans la demi-coquille 500A.

Compte tenu de l'emplacement du module 500, qui est à proximité immédiate de l'accrocheur d'aile 42, la cellule 501 permet de connaître, avec un dégré de précision satisfaisant, la pression de l'écoulement E lorsqu'il pénètre dans le réservoir 300, à travers l'orifice 301. En d'autres termes, l'emplacement du module 500, au niveau du moyen de raccordement formé par l'accrocheur d'aile 42, permet à la cellule 501 de mesurer une valeur représentative P1 de la pression P de l'écoulement E transitant à travers l'accrocheur d'aile 42 quand il pénètre dans le réservoir 300. La cellule 501 forme, à ce titre, un capteur de mesure de la valeur P1 de la pression P.

Dans l'exemple, le module 500 est au voisinage de la soupape frontale 422, de sorte que la distance entre la cellule 501 et le point de transfert du carburant du système d'avitaillement vers l'aéronef est inférieure à 10 cm. Le point de transfert du carburant est défini à la sortie de l'accrocheur d'aile 42 comme le point où la propriété du carburant passe de la compagnie fournissant le carburant à la compagnie exploitante de l'aéronef.

La cellule 501 est alimentée en énergie électrique à partir d'une batterie 502, logée dans la demi-coquille 500B. Des conducteurs électriques non représentés s'étendent entre les demi-coquilles 500A et 500B pour relier entre elles la cellule 501 et la batterie 502.

La cellule 501 est raccordée électriquement à un émetteur radio 503 également logé dans la demi-coquille 500A et alimenté par la batterie 502. La cellule 501 fournit à l'émetteur 503 un signal électronique S₀(P) correspondant à la valeur P1 de la pression qu'elle mesure.

L'émetteur 503 est équipé d'une antenne 504 qui lui permet d'émettre un signal non filaire S₁(P) incluant des données correspondant à la valeur de la pression P mesurée par la cellule 501. A titre d'exemple, le mode de transmission du signal S₁(P) est assuré par radio fréquence mais, en variante, il peut se faire par infra-rouge.

Par ailleurs, le dispositif d'avitaillement est équipé d'un récepteur 600 appairé au module 500 et dont l'antenne 604 lui permet de recevoir le signal S₁(P).

Le récepteur 600 est alors en mesure de transmettre à l'unité électronique de contrôle 110 un signal S₂(P) représentatif de la pression P de l'écoulement E détectée par la cellule 501, plus précisément de la valeur P1 mesurée par la cellule 501.

L'unité 110 peut alors tenir compte de la valeur de cette pression P pour piloter, notamment, le régulateur de pression 60 au moyen du signal électronique approprié S₆₀.

On note ΔP la perte de charge de l'écoulement E dans le tuyau flexible 40.

L'unité 110 comprend des moyens logiciels et matériels, ainsi qu'une ou plusieurs mémoires, notamment un ou plusieurs microprocesseurs incluant des programmes informatiques, ainsi qu'une ou plusieurs mémoires, lui permettant, entre autres, d'effectuer automatiquement les étapes de la méthode et du procédé mentionnées ci-après.

L'unité 110 est configurée pour calculer une valeur ΔP1 de la perte de charge ΔP à partir des signaux S₂(P) et S'₅₂ reçus respectivement de la part de la cellule 501 et du capteur de pression 52.

La fréquence de mesure de la cellule 501 et du capteur 52 peut être relativement élevée, de l'ordre de 50 Hertz (Hz), voire 100 Hz, en fonction de la technologie utilisée pour ces capteurs et de la technologie utilisée pour la transmission sans fil entre l'émetteur 503 et le récepteur 600. Ainsi, l'unité 110 est en mesure de calculer en permanence, à intervalles réguliers, la valeur ΔP1 de la perte de charge ΔP, en cours de fonctionnement du dispositif d'avitaillement 2..

Par ailleurs, cette perte de charge calculée ΔP1 est comparée par l'unité 110 avec une valeur de référence ΔP0 préalablement stockée dans une mémoire de l'unité 110.

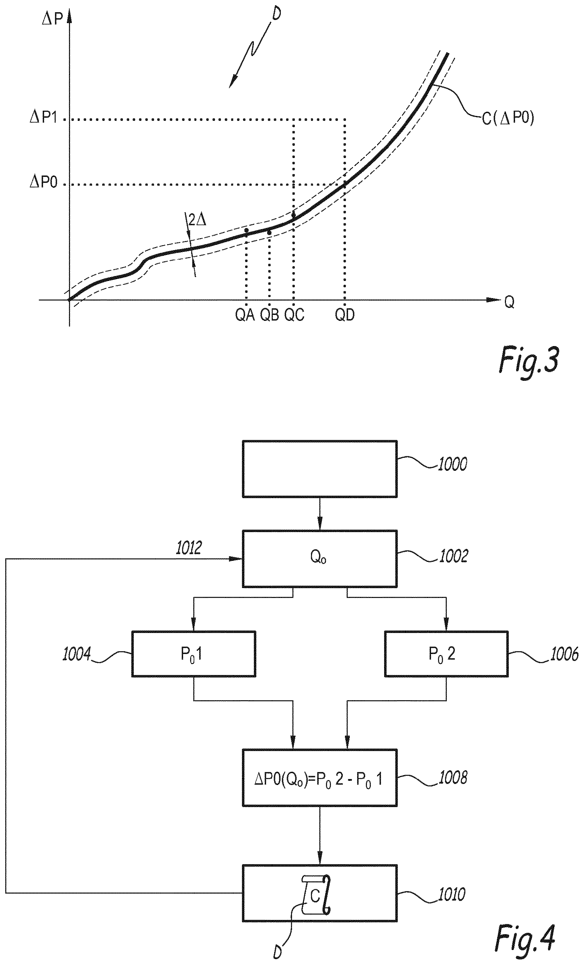

La figure 3 montre en traits pleins une courbe C représentant différentes valeurs de référence ΔP0 de la perte de charge ΔP dans le tuyau flexible 40, en fonction du débit Q de l'écoulement E sur son trajet, c'est-à-dire dans les tuyaux 20 et 40 ainsi que dans les éléments 32 à 34 et 52.

La courbe C est établie lors de la mise en service du dispositif d'avitaillement 2, au moyen d'une méthode représentée schématiquement à la figure 4.

Cette méthode débute par une étape d'initialisation 1000 au cours de laquelle une mémoire de l'unité 110 est remise à zéro, puis le dispositif d'avitaillement 2 est mis en fonctionnement, de telle sorte que l'écoulement E se produit de la bouche 200 vers le réservoir 300, donc dans le tuyau flexible 40.

Lors d'une étape 1002 postérieure à l'étape 1000, le débit Qo de l'écoulement E est déterminé. Cette détermination peut avoir lieu sur la base du signal S'₅₀ transmis par le compteur 50 à l'unité 110, ce signal étant dérivé en fonction du temps.

La méthode de mise en service de l'invention comprend également deux étapes 1004 et 1006 au cours desquelles la pression de l'écoulement E est mesurée, respectivement par la cellule 501 et par le capteur 52, ce qui permet de récupérer deux valeurs de pression mesurées, à savoir la valeur P₀1 mesurée par la cellule 501 à l'étape 1004 et la valeur de pression P₀2 mesurée par le capteur 52 à l'étape 1006.

L'ordre des étapes 1002, 1004 et 1006 n'est pas figé. Ces étapes peuvent être successives, dans n'importe quel ordre, ou simultanées, pour autant qu'elles ont toutes lieu pendant que l'écoulement E est effectif, avec un même débit Q.

Après les étapes 1002, 1004 et 1006, il est possible de déterminer, pour le débit Qo concerné, la perte de charge correspondante ΔP0(Q₀) qui est égale à la différence des valeurs P₀2 et P₀1. Cette détermination a lieu par calcul lors d'une étape 1008.

La valeur ΔP0(Q₀) calculée à l'étape 1008 est stockée dans la mémoire de l'unité 110, en tant que partie d'un ensemble de données D représentant la courbe C de la figure 3, ce qui a lieu dans une étape 1010.

Les étapes 1002 et 1010 sont répétées pour différentes valeurs du débit Qo, ce que représente la flèche d'itération 1012 à la figure 4.

Ainsi, la méthode de la figure 4 permet de créer un ensemble de données D qui contient, pour différentes valeurs du débit Qo, les valeurs de perte de charge associées ΔP₀ qui ont été mesurées lors de la mise en service du dispositif d'avitaillement.

La courbe C peut alors être créé par interpolation entre les valeurs mesurées.

Comme la mise en service a lieu avec un matériel fonctionnel, que ce soit parce qu'il s'agit d'un matériel neuf ou parce que la mise en service a lieu après une opération de maintenance, on peut considérer que la courbe C est représentative de la perte de charge ΔP en configuration normale d'utilisation du dispositif d'avitaillement 2. La courbe C est donc une courbe de valeurs de références ΔP0 pour la perte de charge ΔP dans le conduit flexible 40.

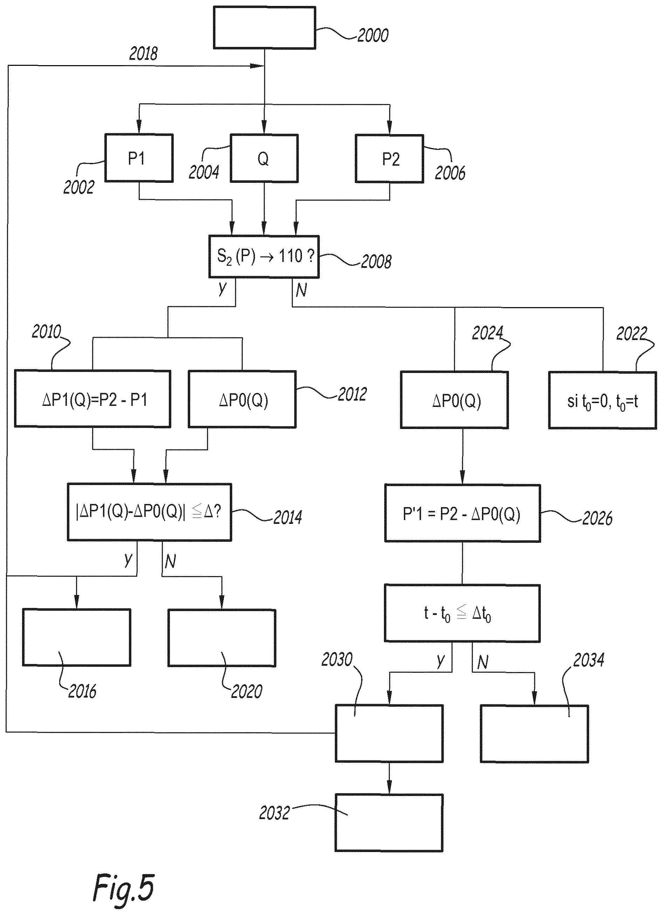

En cours d'utilisation du dispositif d'avitaillement 2 après sa mise en service, on met en œuvre un procédé d'avitaillement partiellement représenté à la figure 5. La figure 5 est un schéma bloc du procédé d'avitaillement de l'invention où seules sont représentées les étapes pertinentes pour la présente invention.

Le procédé d'avitaillement de l'invention comprend une étape d'initialisation 2000 au cours de laquelle des mémoires de l'unité 110 affectées par le procédé d'avitaillement sont réinitialisées, mais pas celles contenant l'ensemble des données D. En particulier, la valeur to utilisée ultérieurement dans l'étape 2022 est mise à zéro.

Postérieurement à l'étape 2000, trois étapes sont mises en œuvre, dans un ordre quelconque, à savoir des étapes 2002, 2004 et 2006. Lors de l'étape 2002, la valeur P1 de la pression P de l'écoulement E dans le conduit flexible 40, au voisinage de l'accrocheur d'aile 42, est mesurée par la cellule 501. Lors de l'étape 2004, la valeur du débit Q de l'écoulement E est calculée par l'unité 110, sur la base du signal S'₅₀. Lors de l'étape 2006, la valeur P2 de la pression P en amont du conduit 40 est mesurée par le capteur 52.

Lors d'une étape 2008, il est vérifié par l'unité 110 si elle a bien reçu le signal S'₂(P) représentatif de la valeur P1 mesurée par la cellule 501.

Si tel est le cas, l'unité 110 met en œuvre une étape 2010 où elle calcule la valeur ΔP1 de la perte de charge, en soustrayant la valeur P1 obtenue à l'étape 2002 de la valeur P2 obtenue à l'étape 2006. Cette valeur ΔP1 est valable pour le débit Q déterminé à l'étape 2004.

En parallèle, avant ou après l'étape 2010, l'unité 110 met en œuvre une autre étape 2012 au cours de laquelle elle détermine, pour le même débit Q, la valeur de référence ΔP0 qui appartient à la courbe C, en accédant à la mémoire de l'unité 110 où l'ensemble de données D a été stocké lors de l'étape 1010.

Lors d'une étape subséquente 2014, la valeur absolue de la différence entre les valeurs ΔP1(Q) et ΔP0(Q), respectivement calculée et obtenue aux étapes 2010 et 2012, est elle-même calculée et comparée à une marge de tolérance préétablie Δ.

En pratique la marge de tolérance Δ est choisie par le fabricant ou l'utilisateur du dispositif d'avitaillement 2. Elle peut s'exprimer sous la forme d'une valeur absolue, par exemple 0,2 bar ou 0,5 bar, ou sous la forme d'un pourcentage de la perte de charge moyenne constatée dans le tuyau flexible 40 de dispositifs d'avitaillement du même type que le dispositif 2, par exemple 2% de cette perte de charge moyenne.

En d'autres termes, en revenant à la figure 3, on définit autour de la courbe C un « tube » de largeur 2Δ qui correspond à des valeurs de perte de charge pour lesquelles l'avitaillement est considéré comme se déroulant de façon normale.

C'est ce que représentent les valeurs associées aux débits Q_{A}, Q_{B} et Q_{C} à la figure 3. Dans ce cas, un signal peut être émis par l'unité 110 lors d'une étape 2016 pour confirmer que l'avitaillement a lieu de façon normale. En outre, comme représenté par la flèche d'itération 2018, les étapes 2002 à 2014 sont à nouveau mises en œuvre, de façon périodique à une fréquence prédéterminée, par exemple 10 à 20 Hz. Ainsi, les étapes de mesure 2002, 2004 et 2006 et les étapes suivantes de calcul peuvent être considérées comme effectuée de façon continue.

Dans le cas contraire, lorsque la comparaison de l'étape 2014 montre que l'écart entre les valeurs ΔP1(Q) et ΔP0(Q) est strictement supérieur à la marge de tolérance Δ, comme représenté pour le débit Q_{D} à la figure 3, l'unité 110 émet un signal pour prévenir que l'avitaillement a lieu de façon anormale, à cause de la perte de charge détectée dans le tuyau flexible 40, ce qui a lieu lors d'une étape 2020.

Selon le cas, il peut être prévu que, après l'étape 2020, le procédé d'avitaillement est arrêté ou poursuivi avec une consigne de pression du régulateur diminué(s).

Ainsi, les étapes 2000 à 2020 du procédé d'avitaillement de la figure 5 permettent d'assurer un contrôle de la perte de charge dans le tuyau flexible 40.

En cas d'obstruction partielle du tuyau flexible 40 ou de colmatage d'un tamis filtrant disposé en entrée de l'accrocheur d'aile 42, la perte de charge ΔP dans le tuyau 40 augmente sensiblement, au point que le résultat de la comparaison de l'étape 2014 est négatif, c'est-à-dire hors tolérance, ce qui peut être signalé à un utilisateur, lors de l'étape 2020.

De même, à débit donné, la valeur mesurée par le capteur 501 doit être égale à la valeur mesurée par le capteur 52 minorée des pertes de charge. En d'autres termes, le système dispose d'une caractéristique d'auto-surveillance des valeurs données par les capteurs de pression 501 et 52. Cette propriété peut être prise en compte par l'unité électronique 110 pour modifier les conditions de fonctionnement du régulateur de pression 60 grâce au signal S₆₀.

Dans ces conditions, compte tenu des bénéfices en termes de sécurité apportés par la redondance des mesures, la surveillance continue des valeurs réelles des pressions et la traçabilité de ces valeurs, on peut s'interroger sur l'utilité d'un régulateur mécanique incorporé l'accrocheur 42 dans les matériels connus, lequel régulateur est disposé en aval du tuyau flexible 40. En veillant à respecter la sécurité de fonctionnement du dispositif d'avitaillement 2, il peut donc être envisagé de travailler, dans le dispositif d'avitaillement 2 de l'invention, sans régulateur de pression mécanique disposé sur le trajet de l'écoulement E, en sortie ou en aval du tuyau flexible 40. Ceci induit un gain de poids appréciable de l'ensemble formé du tuyau 40 et de l'accrocheur d'aile 42, ainsi qu'une simplification de sa fabrication et de sa maintenance et une amélioration de sa sécurité, en particulier en termes de traçabilité des opérations.

Grâce au procédé d'avitaillement décrit ci-dessus, il est possible de tenir compte de la valeur P1 de la pression P de l'écoulement E mesurée au voisinage du point de transfert A pour réguler, grâce à l'unité 110 et au signal S₆₀, la pression de l'écoulement E en amont du tuyau flexible 40. Le dispositif d'avitaillement n'incorpore donc pas de régulateur de pression mécanique disposé, sur le trajet de l'écoulement E, en sortie ou en aval du tuyau flexible 40, à la différence des dispositifs connus. Cette caractéristique est toutefois optionnelle. Pour des raisons de redondance ou normatives, un régulateur mécanique peut, en variante non représentée, être disposé sur le trajet de l'écoulement E, en sortie ou en aval du tuyau flexible 40.

Il ressort de ce qui précède que, la cellule 501 et l'unité électronique 110 permettent de piloter le régulateur de pression 60 avec le signal S₆₀ en fonction de la valeur P1 de la pression P mesurée par la cellule 501. Il est ainsi formé par les parties 501 et 110 une boucle de pilotage du régulateur de pression 60, ce qui permet d'ajuster la pression P de l'écoulement E au voisinage de l'accrocheur d'aile 40.

Selon un aspect particulièrement avantageux de l'invention qui est optionnel et représenté par les étapes 2024 à 2034 à la figure 5, le procédé d'avitaillement de l'invention peut également permettre de traiter une interruption temporaire de la transmission des valeurs de pression entre l'émetteur 503 et le récepteur 600. En effet, compte tenu de la latence de la transmission non filaire utilisée, entre les éléments 503 et 600, il peut arriver que cette transmission soit perturbée ou retardée, au point que l'unité 110 ne dispose pas, en temps voulu, de la valeur P1 mesurée par la cellule 501 pour piloter efficacement les différentes parties du dispositif d'avitaillement, dont le régulateur de pression 60.

Il convient de noter que la transmission des signaux S'₅₀ et S'₅₂ vers l'unité 110 n'est pas sujette à des perturbations, car la transmission des signaux S'₅₀ et S'₅₂ est filaire. Elle peut notamment avoir lieu au moyen de câbles blindés.

Dans le cas où la réception du signal S₂(P) par le récepteur 600 est temporairement interrompue, on peut faire l'hypothèse que la variation de la perte de charge ΔP dans le tuyau flexible 40 est relativement lente, au point que cette perte de charge peut être considérée comme constante sur une période de temps relativement brève, par exemple égale à 500 ms.

Si le résultat de la vérification de l'étape 2008 est négatif, c'est-à-dire que l'unité 110 ne dispose pas du signal S₂(P), l'unité 110 met en œuvre une étape 2022 où elle substitue la valeur de la variable to en la rendant égale à celle de l'instant t où le défaut de transmission du signal S₂(P) a été constaté.

Il est alors mis en œuvre une étape 2024 d'accès à l'ensemble de données D représentant la courbe C pour déterminer la perte de charge ΔP₀(Q) dans le tuyau flexible 40 pour le débit Q mesuré à l'étape 2004.

Une étape subséquente 2026 est alors mise en œuvre au cours de laquelle une valeur de substitution P'1 de la valeur P1 mesurée par la cellule 501 à l'étape 2002 est calculée, comme la différence entre la valeur P2 mesurée par le deuxième capteur 52 à l'étape 2006 et la valeur de la perte de charge ΔP0(Q) déterminée à l'étape 2024.

Lors d'une étape subséquente 2028, l'unité 110 calcule la durée entre l'instant courant t de calcul de la valeur P'1 à l'étape 2026 et l'instant to déterminé à l'étape 2022. Si cette différence est inférieure à une valeur paramétrable Δt₀, cela signifie que la transmission de données a été interrompue pendant moins que la valeur Δt₀. Dans ce cas, le pilotage du processus d'avitaillement peut avoir lieu de façon dégradée à l'étape 2030 et les étapes 2002 et suivantes du procédé d'avitaillement peuvent être mises en œuvre de façon itérative, ce que représente la flèche 2018.

En pratique, la valeur paramétrable Δt₀ peut être choisie entre 50 et 200 ms.

Dans ce cas également, l'unité 110 peut mettre en œuvre une étape optionnelle 2032 signalant que la valeur de la pression de l'écoulement E au voisinage de l'accrocheur d'aile 42 est une valeur estimée P'₁ et non pas une valeur mesurée P1 et que le dispositif d'avitaillement fonctionne en mode dégradé.

Dans le cas où la vérification de l'étape 2018 donne un résultat négatif ou hors tolérance, c'est-à-dire dans le cas où le défaut de transmission du signal S₂(P) a eu lieu sur une période supérieure à la durée maximale Δt₀, une étape 2034 est émise au cours de laquelle un signal d'alarme est émis par l'unité 110.

Dans ce qui précède, le tuyau 40 est un tuyau flexible. En variante non représentée, il peut s'agir d'un tuyau polyarticulé constitué de plusieurs tronçons rigides reliés entre eux par des joints tournants.

En variante non représentée de l'invention, à la place d'un débit Q calculé sur la base du signal S'₅₀ du compteur 50, on peut utiliser un débit mesuré par un débitmètre disposé sur le conduit 34, de préférence, en amont du connecteur 35. Comme mentionné ci-dessus, ce débitmètre peut être intégré au capteur de pression 52.

L'invention est représentée dans le cas où les éléments 501 à 503 sont disposés dans un module 500 formé de deux demi-coquilles 500A et 500B. Ceci est toutefois optionnel et d'autres modes de montage de la cellule de mesure 501 sur l'accrocheur 42 sont envisageables, notamment celui décrit dans WO-A-2010/128246.

L'invention est décrite ci-dessus dans le cas où l'unité électronique 110 sert à la fois pour calculer la perte de charge ΔP1, pour comparer cette perte de charge avec la valeur de référence ΔP0 et pour calculer la valeur de substitution P'1. Selon le cas, un même microprocesseur de l'unité électronique 110 peut servir aux calculs et à la comparaison précités ou bien différents calculateurs distincts de cette unité 110 peuvent être utilisés. En variante, plusieurs unités électroniques distinctes peuvent être prévues à cet effet.

L'invention est décrite ci-dessus dans le cas où le dispositif d'avitaillement 2 est monté sur l'engin 1 et relié à un réseau d'alimentation en carburant. Elle est toutefois applicable au cas où ce dispositif est monté à poste fixe. Elle est également applicable au cas où l'engin 1 est un avitailleur équipé d'une citerne de carburant et d'une pompe.

## Revendications

1. Dispositif (2) d'avitaillement d'un aéronef (400), ce dispositif comprenant un conduit déformable (40) de circulation de carburant dont l'extrémité aval (43) est équipée d'un accrocheur d'aile (42) pour son raccordement sur un orifice d'entrée (301) d'un réservoir de carburant (300) de l'aéronef, ce dispositif comprenant un premier capteur (501) de mesure de valeurs (P1) de la pression (P), au voisinage de l'accrocheur d'aile (42), d'un écoulement (E) de carburant dans le conduit déformable (40), ainsi qu'un organe (50) de détermination du débit (Q) de l'écoulement (E) dans le conduit déformable, **caractérisé en ce que** le dispositif d'avitaillement comprend, en outre, au moins :
- un deuxième capteur (52) de mesure de valeurs (P2) de la pression de l'écoulement (E) en amont du conduit déformable (40) ; et
- une unité (110) de calcul de la valeur (ΔP1) de la perte de charge (ΔP) de l'écoulement (E) dans le conduit déformable (40), sur la base des valeurs de pression (P1, P2) mesurées par les premier et deuxième capteurs (501, 52) ; et
- une unité (110) de comparaison de la valeur de perte de charge calculée (ΔP1) avec une valeur de référence (ΔP0) établie pour le même débit (Q) de l'écoulement (E).

2. Dispositif d'avitaillement selon la revendication 1, **caractérisé en ce qu'**il comprend un régulateur de pression (60) installé sur le trajet de l'écoulement (E), en amont du conduit déformable (40) et une boucle (501, 110) de pilotage de ce régulateur de pression comprenant le premier capteur (501) de mesure des valeurs (P1) de la pression (P) de l'écoulement (E) et la ou les unités (110) de calcul et de comparaison.

3. Dispositif d'avitaillement selon la revendication précédente, **caractérisé en ce qu'**il est dépourvu de régulateur de pression mécanique disposé, sur le trajet de l'écoulement (E), en sortie ou en aval du conduit déformable (40).

4. Dispositif d'avitaillement selon l'une des revendications précédentes, **caractérisé en ce qu'**il comprend également des moyens de calcul d'une valeur (P'1) de la pression (P), au voisinage de l'accrocheur d'aile (42), de l'écoulement (E) de carburant dans le conduit déformable (40), sur la base de la pression (P2) de l'écoulement en amont du conduit déformable (40) et de la valeur de référence (ΔP0) établie pour le même débit (Q) de l'écoulement (E).

5. Méthode de mise en service d'un dispositif d'avitaillement (2) selon l'une des revendications précédentes, **caractérisée en ce qu'**elle comprend au moins des étapes de calibration consistant à :
a) établir (1008) une relation (C) entre le débit (Q) de l'écoulement (E) de carburant dans le conduit déformable et la perte de charge (ΔP) dans le conduit déformable (40), en configuration normale de fonctionnement du dispositif d'avitaillement (2) ; et
b) mémoriser (1010), pour différents débits (Q) de l'écoulement, une valeur de référence (ΔP0) de la perte de charge dans le conduit déformable (40).

6. Procédé d'avitaillement d'un aéronef au moyen d'un dispositif d'avitaillement selon l'une des revendications 1 à 4, mis en service par la méthode de la revendication 5, **caractérisé en ce qu'**il comprend au moins des étapes consistant à :
c) mesurer (2002) une première valeur (P1) de la pression (P) de l'écoulement (E) de carburant dans le conduit déformable (40), au voisinage de l'accrocheur d'aile (42), au moyen du premier capteur (501) ;
d) déterminer (2004) le débit (Q) de l'écoulement (E) dans le conduit déformable ;
e) mesurer (2006) une deuxième valeur (P2) de la pression (P) en amont du conduit déformable (40) au moyen du deuxième capteur ;
f) calculer la valeur (ΔP1) de la perte de charge (ΔP) dans le conduit déformable (40), par soustraction de la valeur mesurée à l'étape c) de la valeur mesurée à l'étape e) ; et
g) comparer (2014) la valeur calculée (ΔP1) à l'étape f) à la valeur de référence (ΔP0) mémorisée à l'étape b) pour le même débit que celui déterminé à l'étape d).

7. Procédé selon la revendication 6, **caractérisé en ce qu'**il comprend au moins une étape supplémentaire consistant à :
h) en fonction du résultat de l'étape de comparaison g) et d'une marge de tolérance préétablie (Δ), signaler (2016, 2020) que l'avitaillement a lieu de façon normale ou anormale.

8. Procédé selon l'une des revendications 6 ou 7, dans lequel les valeurs (P1) de pression mesurées par le premier capteur (501) sont transmises à une unité (110) de pilotage du dispositif d'avitaillement (2), **caractérisé en ce que**, en cas d'interruption temporaire de la transmission des valeurs mesurées par le premier capteur (501), que le procédé comprend au moins des étapes consistant à :
i) accéder (2012) la valeur de référence (ΔP0) de la perte de charge mémorisée à l'étape b) pour le même débit (Q) que celui déterminé à l'étape d) ;
j) calculer (2026) une valeur de substitution (P'1) de la valeur mesurée par le premier capteur de pression en soustrayant la valeur de référence (ΔP0) accédée à l'étape i) de la deuxième valeur (P2) mesurée à l'étape e) ; et
k) utiliser (2030) la valeur de substitution (P'1) calculée à l'étape j), à la place de la valeur (P1) mesurée par le premier capteur (501), pour le contrôle de l'avitaillement en cours, sans interrompre l'avitaillement.

9. Procédé selon la revendication 8, **caractérisé en ce qu'**il comprend au moins une étape supplémentaire consistant à :
I) en cas de mise en œuvre des étapes j) et k), signaler (2032) que l'avitaillement a lieu en mode temporairement dégradé.

10. Procédé selon l'une des revendications 8 ou 9, **caractérisé en ce que** les étapes d), e), i), j) et k) sont mises en œuvre par itération (2018) pendant un intervalle de temps de durée maximale prédéterminée (Δt₀) et **en ce que**, en cas de persistance de l'interruption temporaire de la transmission de valeurs mesurées par le premier capteur (501) au-delà de cette durée maximale prédéterminée, un signal d'alarme est émis (2034).

## Patentansprüche

1. Vorrichtung (2) zur Betankung eines Luftfahrzeugs (400), diese Vorrichtung umfassend eine verformbare Kraftstoffzirkulationsleitung (40), deren stromabwärtiges Ende (43) mit einem Tragflächenhalter (42) für seinen Anschluss an einer Einlassöffnung (301) eines Kraftstofftanks (300) des Luftfahrzeugs ausgestattet ist, diese Vorrichtung umfassend einen ersten Sensor (501) zum Messen von Werten (P1) des Drucks (P) einer Strömung (E) von Kraftstoff in der verformbaren Leitung (40) in der Nähe des Tragflächenhalters (42) sowie ein Organ (50) zum Bestimmen des Durchflusses (Q) der Strömung (E) in der verformbaren Leitung umfasst, **dadurch gekennzeichnet, dass** die Betankungsvorrichtung ferner mindestens Folgendes umfasst:
- einen zweiten Sensor (52) zum Messen von Werten (P2) des Drucks der Strömung (E) stromaufwärts von der verformbaren Leitung (40); und
- eine Einheit (110) zum Berechnen des Werts (ΔP1) des Druckverlusts (ΔP) der Strömung (E) in der verformbaren Leitung (40) basierend auf den Druckwerten (P1, P2), die von dem ersten und dem zweiten Sensor (501, 52) gemessen werden; und
- eine Einheit (110) zum Vergleichen des berechneten Druckverlustwerts (ΔP1) mit einem Referenzwert (ΔP0), der für die gleiche Durchflussrate (Q) der Strömung (E) festgelegt ist.

2. Betankungsvorrichtung nach Anspruch 1, **dadurch gekennzeichnet, dass** sie einen Druckregler (60), der auf dem Weg der Strömung (E) stromaufwärts von der verformbaren Leitung (40) installiert ist, und eine Schleife (501, 110) zur Steuerung dieses Druckreglers, umfassend den ersten Sensor (501) zum Messen der Werte (P1) des Drucks (P) der Strömung (E) und die Einheit(en) (110) zum Berechnen und zum Vergleichen umfasst.

3. Betankungsvorrichtung nach dem vorherigen Anspruch, **dadurch gekennzeichnet, dass** ihr ein mechanischer Druckregler fehlt, der auf dem Weg der Strömung (E) an dem Ausgang oder stromabwärts von der verformbaren Leitung (40) angeordnet ist.

4. Betankungsvorrichtung nach einem der vorherigen Ansprüche, **dadurch gekennzeichnet, dass** sie auch Einrichtungen zum Berechnen eines Werts (P'1) des Drucks (P) in der Nähe des Tragflächenhalters (42) der Strömung (E) von Kraftstoff in der verformbaren Leitung (40) basierend auf dem Druck (P2) der Strömung stromaufwärts von der verformbaren Leitung (40) und dem Referenzwert (ΔP0), der für den gleichen Durchfluss (Q) der Strömung (E) festgelegt ist, umfasst.

5. Verfahren zur Inbetriebnahme einer Betankungsvorrichtung (2) nach einem der vorherigen Ansprüche, **dadurch gekennzeichnet, dass** es mindestens Kalibrierungsschritte umfasst, die aus Folgendem bestehen:
a) Erstellen (1008) eines Verhältnisses (C) zwischen der Durchflussrate (Q) der Strömung (E) von Kraftstoff in der verformbaren Leitung und dem Druckverlust (ΔP) in der verformbaren Leitung (40) in der normalen Betriebskonfiguration der Betankungsvorrichtung (2); und
b) Speichern (1010), für verschiedene Durchflussraten (Q) der Strömung, eines Referenzwerts (ΔP0) des Druckverlusts in der verformbaren Leitung (40).

6. Verfahren zum Betanken eines Luftfahrzeugs mittels einer Betankungsvorrichtung nach einem der Ansprüche 1 bis 4, die durch das Verfahren nach Anspruch 5 in Betrieb genommen wird, **dadurch gekennzeichnet, dass** es mindestens die Schritte umfasst, die aus Folgendem bestehen:
c) Messen (2002) eines ersten Werts (P1) des Drucks (P) der Strömung (E) von Kraftstoff in der verformbaren Leitung (40) in der Nähe des Tragflächenhalters (42) mittels des ersten Sensors (501);
d) Bestimmen (2004) der Durchflussrate (Q) der Strömung (E) in der verformbaren Leitung;
e) Messen (2006) eines zweiten Werts (P2) des Drucks (P) stromaufwärts von der verformbaren Leitung (40) mittels des zweiten Sensors;
f) Berechnen des Werts (ΔP1) des Druckverlustes (ΔP) in der verformbaren Leitung (40) durch Subtraktion des in Schritt c) gemessenen Werts von dem in Schritt e) gemessenen Wert; und
g) Vergleichen (2014) des in Schritt f) berechneten Werts (ΔP1) mit dem in Schritt b) gespeicherten Referenzwert (ΔP0) für die gleiche Durchflussrate wie jene, die in Schritt d) bestimmt wird.

7. Verfahren nach Anspruch 6, **dadurch gekennzeichnet, dass** es mindestens einen weiteren Schritt umfasst, der aus Folgendem besteht:
h) basierend auf dem Ergebnis des Vergleichsschritts g) und einer voreingestellten Toleranzspanne (Δ) Signalisieren (2016, 2020), dass das Betanken normal oder anormal erfolgt.

8. Verfahren nach einem der Ansprüche 6 oder 7, wobei die von dem ersten Sensor (501) gemessenen Druckwerte (P1) an eine Steuereinheit (110) der Betankungsvorrichtung (2) übertragen werden, **dadurch gekennzeichnet, dass** das Verfahren im Fall einer vorübergehenden Unterbrechung der Übertragung der von dem ersten Sensor (501) gemessenen Werte mindestens Schritte umfasst, die aus Folgendem bestehen:
i) Zugreifen (2012) auf den Referenzwert (ΔP0) des in Schritt b) gespeicherten Druckverlusts für dieselbe Durchflussrate (Q), die in Schritt d) bestimmt wird;
j) Berechnen (2026) eines Ersatzwerts (P'1) des von dem ersten Drucksensor gemessenen Werts durch Subtrahieren des in Schritt i) zugegriffenen Referenzwerts (ΔP0) von dem in Schritt e) gemessenen zweiten Wert (P2); und
k) Verwenden (2030) des in Schritt j) berechneten Ersatzwerts (P'1) anstelle des von dem ersten Sensor (501) gemessenen Werts (P1) für die laufende Betankungssteuerung, ohne ein Betanken zu unterbrechen.

9. Verfahren nach Anspruch 8, **dadurch gekennzeichnet, dass** es mindestens einen weiteren Schritt umfasst, der aus Folgendem besteht:
I) bei Durchführung der Schritte j) und k) Signalisieren (2032), dass eine Betankung in einem zeitweilig beeinträchtigten Modus erfolgt.

10. Verfahren nach einem der Ansprüche 8 oder 9, **dadurch gekennzeichnet, dass** die Schritte d), e), i), j) und k) iterativ (2018) während eines Zeitintervalls mit vorbestimmter maximaler Dauer (Δto) durchgeführt werden und dass bei Fortdauer der vorübergehenden Unterbrechung der Übertragung von Messwerten durch den ersten Sensor (501) über diese vorbestimmte maximale Dauer hinaus ein Alarmsignal ausgegeben wird (2034).

## Claims

1. An aircraft (400) refueling device (2), this device comprising a deformable pipe (40) for the circulation of fuel, the downstream end (43) of which is provided with a wing fastener (42) for the connection thereof onto an intake port (301) of an aircraft fuel tank (300), this device comprising a first sensor (501) for measuring the pressure (P) values (P1), in the vicinity of the wing fastener (42), of a fuel flow (E) in the deformable pipe (40), as well as a member (50) for determining the rate (Q) of the flow (E) in the deformable pipe, **characterized in that** the refueling device further comprises at least:
- a second sensor (52) for measuring the pressure values (P2) of the flow (E) upstream of the deformable pipe (40); and
- a unit (110) is provided for calculating the value (ΔP1) of the pressure drop (ΔP) of the flow (E) in the deformable pipe (40), based on the pressure values (P1, P2) measured by the first and second sensors (501, 52); and
- a unit (110) for comparing this calculated pressure drop value (ΔP1) with a reference value (ΔP0) established for the same flow (E) rate (Q).

2. The refueling device according to claim 1, **characterized in that** it comprises a pressure regulator (60) installed on the path of the flow (E), upstream of the deformable pipe (40), and a control loop (501, 110) of this pressure regulator comprising the first sensor (501) for measuring values (P1) of the pressure (P) of the flow (E) and the calculating and comparison unit(s) (110).

3. The refueling device according to the preceding claim, **characterized in that** it has no mechanical pressure regulator arranged, on the flow (E) path, at the outlet of or downstream of the deformable pipe (40).

4. The refueling device according to one of the preceding claims, **characterized in that** it also comprises means for calculating a value (P'1) of the pressure (P), in the vicinity of the wing fastener (42), of the fuel flow (E) in the deformable pipe (40), based on the pressure (P2) of the flow upstream of the deformable pipe (40) and the reference value (ΔP0) established for the same flow (E) rate (Q).

5. A method for commissioning a refueling device (2) according to any one of the preceding claims, **characterized in that** it comprises at least calibration steps consisting of:
a) establishing (1008) a relationship (C) between the fuel flow (E) rate (Q) in the deformable pipe and the pressure drop (ΔP) in the deformable pipe (40), in the normal operating condition of the refueling device (2); and
b) storing (1010), for different flow rates (Q), a reference value (ΔP0) of the pressure drop in the deformable pipe (40).

6. A method for refueling an aircraft using an aircraft refueling device according to one of claims 1 to 4, commissioned by the method according to claim 5, **characterized in that** it comprises at least the following steps:
c) measuring (2002) a first value (P1) of the pressure (P) of the fuel flow (E) in the deformable pipe (40) in the vicinity of the wing fastener (42), using the first sensor (501);
d) determining (2004) the flow (E) rate (Q) in the deformable pipe;
e) measuring (2006) a second value (P2) of the pressure (P) upstream of the deformable pipe (40), using the second sensor;
f) calculating the value (ΔP1) of the pressure drop (ΔP) in the deformable pipe (40), by subtracting the value measured in step c) from the value measured in step e); and
g) comparing (2014) the value calculated (ΔP1) in step f) to the reference value (ΔP0) stored in step b) for the same rate as that determined in step d).

7. The method according to claim 6, **characterized in that** it comprises at least one additional step consisting of:
h) based on the result of the comparison step g) and a preestablished tolerance margin (Δ), of indicating (2016, 2020) that the refueling is taking place normally or abnormally.

8. The method according to one of claims 6 or 7, wherein the pressure values (P1) measured by the first sensor (501) are transmitted to a control unit (110) of the refueling device (2), **characterized in that**, in case of temporary interruption of the transmission of the values measured by the first sensor (501), this method comprises at least steps consisting of:
i) accessing (2012) the reference value (ΔP0) of the pressure drop stored in step b) for the same rate (Q) as that determined in step d);
j) calculating (2026) a substitution value (P'1) for the value measured by the first pressure sensor (ΔP0) by subtracting the reference value accessed in step i) from the second value (P2) measured in step e); and
k) using (2030) the substitution value (P'1) calculated in step j), in place of the value (P1) measured by the first sensor (501), to monitor the refueling in progress, without interrupting the refueling.

9. The method according to claim 8, **characterized in that** it comprises at least one additional step consisting of:
i) in case of implementation of steps j) and k), indicating (2032) that the refueling is taking place in a temporarily downgraded mode.

10. The method according to one of claims 8 or 9, **characterized in that** steps d), e), i), j) and k) are implemented by iteration (2018) during a time interval with a predetermined maximum duration (Δt₀) and **in that**, in case of persistence of the temporary interruption of the transmission of value measured by the first sensor (501) beyond this predetermined maximum duration, an alarm signal is emitted (2034).
